(19) Europäisches Patentamt
European Patent Office
Office européen des brevets

(11) **EP 2 433 908 A1**

(12) **EUROPEAN PATENT APPLICATION**

(43) Date of publication:
**28.03.2012 Bulletin 2012/13**

(51) Int Cl.:
*C02F 1/32* (2006.01)          *C02F 1/72* (2006.01)

(21) Application number: **10178775.2**

(22) Date of filing: **23.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Siemens Aktiengesellschaft
80333 München (DE)**

(72) Inventor: **Sichel, Cosima
89077, Ulm (DE)**

(54) **System and method for reducing at least an amount of disinfection by-products in water**

(57)     The invention relates to a method and a system for reducing at least an amount of disinfection by-products in water, wherein the system comprises a dosing pump (15) for adding a photocatalyst (36) into a stream (17) of the water to obtain a mixed stream (17'), and a photo reactor (20) adapted to receive the mixed stream (17') and to irradiate the mixed stream (17') with photons, the photocatalyst (36) in the mixed stream (17') producing free radicals on being irradiated with the photons, wherein the dosing pump (15) is controllable responsive to an ampunt of absorption of the photons by the mixed stream (17').

FIG 1

**Description**

The present invention relates to a system and a method for reducing at least an amount of disinfection by-products in water

In order to minimize the risk of infectious diseases, it is customary to disinfect water meant for human use. In special applications such as installations for supplying non-stationary drinking water, or the treatment of water in swimming pools, disinfection is a basic necessity. Examples of disinfecting agents used for disinfecting water include chlorine, sodium perchlorite, calcium perchlorite and ozone. Depending on the contaminants in the water and the disinfectant used, various carcinogenic and/or toxic organic and inorganic by-products of disinfection invariably come into existence.

For example, in swimming pools disinfected with chlorine, the organic disinfection by-products produced during disinfection, include, monochloramine, dichloramine, and trichloramine, commonly referred to as combined chlorine. These by-products are restricted in many places, and especially trichloramine, as the same is strongly irritating for the eyes and respiration of the swimmers. These by-products are generated due to the reaction of chlorine with impurities mainly introduced by the swimmers. To eliminate the combined chlorine, various techniques have been suggested, such as, the use of activated carbon, $O_3$, or UV light which decomposes the combined chlorine by photolysis. Photolysis is a chemical reaction in which a chemical compound is broken down by photons.

However, in recent years, it has been reported that there is an increase in other groups of organic disinfection by-products in water occurring due to addition of disinfectant agents to water. For example, the other group of disinfection by-products, includes, but not limited to tri-halogen-methane (THMs). Recent studies have indicated THMs to be associated with the spread of asthma. In swimming pools, majority of the pools containing the by-product THM consists of chloroform. THMs accumulate faster in the blood of swimmers, entering through the skin, than in the blood of drinking water consumers.

Advanced oxidation process (AOP) is a technique by which organic by-products, such as, combined chloramines, THMs and the like and inorganic by-products, such as chlorates and bromates can be decomposed. Chlorates and bromates act like chlorite or carbon monoxide on haemoglobin in the blood, and thus, may interfere with the adsorption of oxygen. The AOP technique involves the decomposition of the by-products using a photocatalysis process. The photocatalysis process is a photoreaction in the presence of a reaction accelerating catalyst. The catalyst used for photocatalysis is generally referred to as a "photocatalyst". In certain implementations, the AOP technique can involve the use of the photolysis process and the photocatalysis process.

It is an object of the embodiments of the invention to provide a system and a method to reduce at least an amount of disinfection by-products in water.

The above object is achieved by a system for reducing at least an amount of disinfection by-products in water according to claim 1 and a method according to claim 12.

The free radicals comprising hydroxyl radicals decompose disinfection by-products in the water. As the mixed stream comprises the photocatalyst, the mixed stream absorbs the photons. The amount of absorption of photons by the mixed stream provides an indication of the concentration of the photocatalyst in the mixed stream. The more photocatalyst is contained in the mixed stream, the less is the amount of irradiance of the photons having passed the mixed stream. Controlling the rate of addition of the photocatalyst in the water enables in maintaining a balance between the photolysis process and the photolysis process throughout the operation of the system, and thus, achieving increased reduction of organic and inorganic disinfection by-products.

According to an embodiment, the system comprises one or more sensors arranged close to or inside the photo reactor to detect an amount of irradiance of the photons after the photons passed through the mixed stream, the one or more sensors configured to output respective signals indicative of the amount of irradiance of the photons. The detection of the amount of irradiance of the photons after the photons passed through the mixed stream provides the amount of absorption of the photons by the photocatalyst. Absorption of the photons by the photocatalyst enables in determining the concentration of the photocatalyst in the mixed stream, and thus, the photocatalytic portion of the combined chemical process including the photolytic process and the photocatalytic process.

According to yet another embodiment, the system further comprises at least one controller operably coupled to the one or more sensors to receive the respective signals, the controller(s) configured to provide a control signal to the dosing pump(s) responsive to the respective signals, wherein the dosing pump(s) is/are operable responsive to the control signal. This enables controlling the dosing pump(s) responsive to the amounts of irradiance of the photons detected by the one or more sensors.

According to yet another embodiment, the controller(s) is/are configured to generate the control signal responsive to an average amount of the amounts of irradiance indicated by the respective signals of a plurality of sensors. Computing the average amount of the amounts of irradiance detected by the plurality of sensors enables in determining an average amount of irradiance accurately as the photocatalyst may not be present in the mixed stream homogeneously.

According to yet another embodiment, wherein the dosing pump(s) is/are operable to control the addition of the amount of photocatalyst such that a concentration of the photocatalyst in the mixed stream is settable in that the amount of irradiance of the photons detected is constant. By detecting the irradiance of the photons after the photons passed through the mixed stream, the amount of absorption of photons by the mixed stream can be determined. Thus, the concentration of the photocatalyst in the mixed stream can be controlled proportional to the measured amount of irradiance.

According to yet another embodiment, the photocatalyst is a chalcogenide. Chalcogenides are semiconductor catalysts that can be excited when irradiated with photons.

According to yet another embodiment, the chalcogenide is an oxide or a sulphide.

According to yet another embodiment, the oxide is selected from the group consisting of a $TiO_2$, $ZnO$, $ZrO_2$, $CeO_2$, $SnO_2$, and $SbrO_2$ and the sulphide is $CdS$ or $ZnS$.

According to yet another embodiment, the photocatalyst is added into the stream in the form of a photocatalyst powder or a slurry containing photocatalyst powder. This provides the advantage of increased surface of the photocatalyst for reaction in water compared to immobilized catalyst applications. The use of a slurry simplifies the dosing of the photocatalyst and further the mainly homogeneous mixing of the photocatalyst powder to the stream of water.

According to another embodiment, the system further comprises a filter unit adapted to remove the photocatalyst at least in part from the mixed stream downstream of a place of irradiation of the mixed stream with the photons. Advanteously, the filter unit is arranged downstream of the photo reactor.

According to another embodiment, the system comprises a filter backwashing system which is adapted to backwash the photocatalyst removed from the mixed stream by the filter unit responsive to the amount of absorption of the photons by the mixed stream. In case a lot of photocatalyst is mixed to the stream of water, the amount of absorption of the photons by the mixed stream is high and a lot of photocatalyst arrives at the filter unit leading to an accelerated clogging the filter unit. To prevent clogging of the filter unit the backwashing cycle can be shortend based on the measured amount of absorption of photons in the mixed steam.

Embodiments of the present invention are further described hereinafter with reference to illustrated embodiments shown in the accompanying drawings, in which:

FIG 1    illustrates a schematic diagram of a system for reducing disinfection by-products in water according to an embodiment herein,

FIG 2    illustrates a schematic diagram of a system for reducing disinfection by-products in water according to a second embodiment herein,

FIG 3    illustrates a schematic diagram of a system for reducing disinfection by-products in water according to a third embodiment herein, and

FIG 4    is a flow diagram illustrating a method of reducing disinfection by-products in water according to an embodiment herein.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

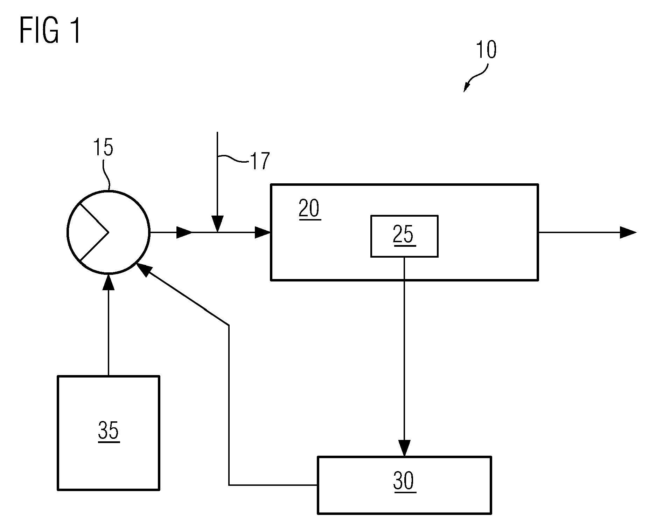

FIG 1 illustrates a schematic diagram of a system 10 for reducing disinfection by-products in water according to an embodiment herein. The system 10 is adapted to deploy the AOP technique for reducing disinfection by-products in water which has been disinfected using disinfectant agents. The AOP technique involves the generation of free radicals comprising hydroxyl radicals. The radicals are created by irradiating a photocatalyst using light of short wavelength on the surface of a photocatalyst.

Referring still to FIG 1, the system 10 comprises a dosing pump 15, a photo reactor 20, a UV sensor 25 and a controller 30. The dosing pump 15 is configured to add a photocatalyst 36 to a stream 17 of water, e.g. branched off swimming pool water, designated by an arrow, for which disinfection by-products are to be reduced. In the present example, the photocatalyst 36 is added such that the same is suspended in the stream 17 of water. The mixture of water and the photocatalyst 36 is hereinafter referred to as a mixed stream 17'. In an aspect, the system 10 further comprises a photocatalyst storage tank 35 and the photocatalyst 36 is advantageously provided to the dosing pump 15 in the form of a slurry containing photocatalyst powder.

Still referring to FIG 1, the mixed stream 17' is provided to the photo reactor 20 and the photo reactor 20 is adapted to irradiate the mixed stream 17' with photons of energy larger or equal to the band gap energy of the photocatalyst 36. Advantageously, the mixed stream 17' is irradiated using UV light having a wavelength shorter than 400 nm. In an aspect, the UV light is generated using a UV light source. Alternatively, as the solar spectrum contains about 3-5% of UV light, the mixed stream 17' can be irradiated using the UV light of the solar spectrum. However, in case the mixed stream 17' is irradiated using the UV light of solar spectrum, the rate of decomposing the disinfection by-products may be slow. For example, at neutral pH-value, as existing in swimming pools, chloramines present in the mixed stream 17' are decomposed by photolysis when the same absorb the UV light. THM present in the mixed stream 17' is decomposed by photocatalysis, as THM is adsorbed by the photocatalyst 36 and decomposed using UV light. Also certain portions of chloramines present in the water can be decomposed by photocatalysis. However, the decomposition of chloramines by photocatalysis may be low at neutral pH-value. Advantageously, to achieve the efficient decomposition of chloramines and THM, the concentration of photocatalyst 36 in the mixed stream 17' is selected such that a combined chemical process of photolysis and photocatalysis is generated in the mixed stream 17'. The proper selection of the concentration of photocatalyst 36 as described above will create a balance between the photolysis process and the photocatalysis process occurring in the mixed stream 17'.

The example of decomposition of organic disinfection by-products, such as chloramines and THM in the aforementioned paragraph, is for explanation purposes only. The embodiments described herein may also be used to decompose other types of organic disinfection by-products which may be present in water.

Referring still to FIG 1, the concentration of photocatalyst 36 for the combined chemical process of photolysis and photocatalyst can be derived using experimental methods easily. Thereafter, in certain aspects, the concentration of the photocatalyst 36 can be optimized depending on the reduction of the amount of disinfectant by-products. If a UV light source is used to generate the UV light, the concentration of the photocatalyst 36 can also be optimized depending on an energy reduction at the UV light source.

Referring still to FIG 1, according to an embodiment herein, after the concentration of the photocatalyst 36 is determined such that the photolysis process and the photocatalysis process are balanced, the addition of the photocatalyst 36 into the stream 17 of water is controlled to maintain the concentration of the photocatalyst 36 such that the balance is maintained. Advantageously, in accordance with the present embodiment, the irradiance of the UV light emitted by the source is maintained constant. Here the UV sensor 25 is arranged inside the photo reactor 20 such that the UV sensor 25 detects the amount of irradiance of the UV light after the UV light passed through the mixed stream 17'. For example, the UV sensor 25 is positioned in the photo reactor 20 at an end of the UV light path opposite to the source of the UV light. The mixed stream 17' isirradiated with the UV light by passing the same through thephoto reactor 20. The UV sensor 25 is configured to output a signal indicative of the detected amount of irradiance of the passed through UV light.

The controller 30 is operably coupled to the UV sensor 25 and the dosing pump 15 and is configured to receive the signal outputted by the UV sensor 25. The controller 30 is configured to provide a control signal to the dosing pump 15 for controlling the addition of the photocatalyst 36 into the stream 17 of water responsive to the signal provided by the UV sensor 25. Advantageously, the dosing pump 15 is controlled depending on the amount of irradiance of the UV light detected by the UV sensor 25. As the amount of irradiance of the UV light is detected by the UV sensor 25 after the UV light passed through the mixed stream 17', controlling the addition of the photocatalyst 36 into the stream 17 responsive to the detected amount of irradiance of the UV light enables in controlling the concentration of the photocatalyst 36 in the mixed stream 17' depending on the absorption of the UV light by the photocatalyst 36. The detected amount of irradiance of the passed through UV light enables in determining the absorption of the UV light by the mixed stream 17'. However, as the absorption of the UV light by water is substantially constant, the absorption of the UV light by the photocatalyst 36 can be determined.

Referring still to FIG 1, for example, the amount of irradiance of the UV light detected by the UV sensor 25 for a concentration of the photocatalyst 36 such that a balance between the photolysis process and the photocatalytic process is maintained can be considered as a threshold. In case more UV light is absorbed by the photocatalyst 36, the amount of irradiance of the UV light detected by the UV sensor 25 is less than the threshold, and vice versa. The amount of irradiance of UV light detected being less than the threshold, indicates that the concentration of photocatalyst 36 in the mixed stream 17' is higher than the concentration required for maintaining the balance between the photolysis process and the photocatalytic process.

Accordingly, in accordance with the embodiments herein, in case the amount of irradiance of the UV light detected by the UV sensor 25 is less than the threshold, the dosing pump 15 can be controlled to reduce the rate of addition of the photocatalyst 36 to the stream 17 of water. Alternatively, in case the amount of irradiance of the UV light detected by the UV sensor is greater than the threshold, the dosing pump 15 can be controlled to increase the rate of addition of the photocatalyst 36 to the stream 17 of water. Controlling of the concentration of the photocatalyst 36 in the mixed stream 17' enables in maintaining the balance between the photolysis process and the photocatalysis process, and thus, ensures process stability and increased decomposition of the disinfection by-products.

Moreover, the concentration of the photocatalyst 36 is determined at real time and the addition of the same is controlled to maintain the balance throughout the operation of the system 10.

The photocatalyst 36 can be a semiconductor catalyst, which, when illuminated with photons of energy equal to or larger than its band gap energy, electrons are promoted from the valance band into the conduction band. In the presence of adsorbates in equilibrium with a gaseous, liquid or aqueous phase, electrons are attracted by electron acceptors such as oxygen, metal cations, etc., and the photo-generated holes react with electron donors. In the presence of water, the photo-generated holes will react with the donors, to oxidize the later, and would result in the formation of free radicals, including highly reactive hydroxyl radicals as per one or both the equations provided below:

$$OH^- + p+ \rightarrow OH^\circ \qquad\qquad (1)$$

$$H_2O + p+ \rightarrow OH^\circ + H^+ \qquad\qquad (2)$$

According to an aspect, the semiconductor catalyst can be a chalcogenide. For an example, the photocatalyst can be an oxide or a sulphide of the chalcogenide. The oxide can include, but not limited to, $TiO_2$, $ZnO$, $ZrO_2$, $CeO_2$, $SnO_2$, and $SbrO_2$. The sulphide can include, but not limited to, $CdS$ and $ZnS$. Generally, the photocatalyst $TiO_2$ is preferred over others because the same is relatively inexpensive, chemically highly stable and the photo-generated holes are highly oxidizing.

An irradiated mixed stream 17 " comprising no or less disinfection by-products is discharged from the photo reactor 20. According to an aspect, the photocatalyst 36 is removed at least in part from the irradiated mixed stream 17 " and the remaining purified water comprising no or less disinfection by-products is introduced into the e.g. swimming pool water again. The purified water is mixed with the unpurified swimming pool water and therefore lowers the concentration of disinfesction by-products in the swimming pool water, from which the stream 17 of water had been separated.

A "controller" as used herein is a device for executing machine-readable instructions stored on a computer readable medium, for performing tasks and may comprise any one or combination of, hardware and firmware. For example, the controller may be implemented using a processor, microcontroller, microprocessor, electronic devices, or other electronic units to perform the functions described herein or a combination thereof. The machine-readable instructions may be stored within the controller or external to the controller.

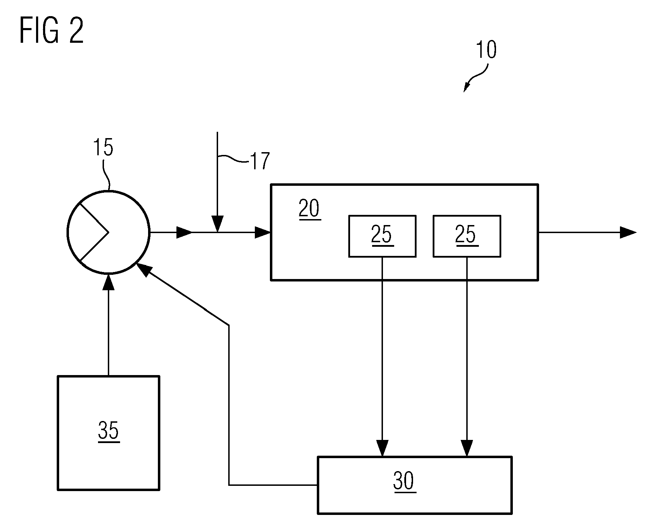

FIG 2 illustrates a schematic diagram of a system 10 for reducing disinfection by-products in a stream 17 of water according to a second embodiment. In the shown example of FIG 2, the system 10 further comprises a plurality of sensors 25 arranged in the photo reactor 20 such that the sensors 25 detect the amount of irradiance of the UV light after the light passed through the mixed stream 17'. The sensors 25 are configured to output a respective signal indicative of the detected amounts of irradiance of the UV light. The controller 30 is operably coupled to the sensors 25 and the dosing pump 15 and is configured to receive the respective signals outputted by the UV sensors 25. The controller 30 is configured to provide a control signal to the dosing pump 15 for controlling the addition of the photocatalyst 36 into the stream 17 of water responsive to the respective signals provided by the UV sensors 25. In an aspect, the controller 30 is configured to compute an average amount of the amounts of intensities indicated by the respective signals. Advantageously, the control signal generated by the controller 30 for controlling the addition of the photocatalyst 36 into the stream 17 can be generated responsive to the average amount computed. Detecting the amounts of irradiance of the UV light using a plurality of UV sensors 25 provides the advantage of deriving the average amount of intensity of UV light after the same has passed through the mixed stream 17' as the flow of the mixed stream 17' is generally turbulent and the mixed stream 17' may be not homogenous. Advantageously, the plurality of UV sensors 25 can be positioned at different locations in and/or close to the photo reactor 20.

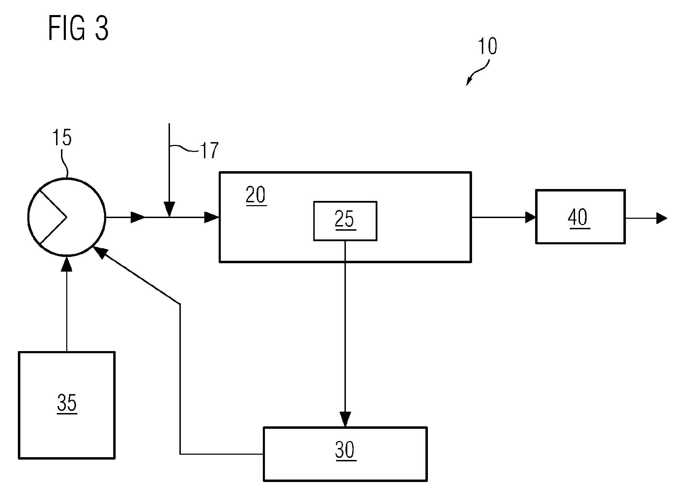

Referring now to FIG 3, the system 10 further comprises a filter unit 40 downstream of the photo reactor 20 according to a third embodiment herein. The filter unit 40 can be adapted to remove the photocatalyst 36 from the mixed stream 17' after the mixed stream 17' has been irradiated with UV light in the photo reactor 20. The filter unit 40, for an example, can be a sand filter. Advantageously, the removed photocatalyst 36 can be recycled for achieving increased efficiency with respect to cost and energy.

An irradiated mixed stream 17 " comprising no or less disinfection by-products is discharged from the photo reactor 20. According to an aspect, the photocatalyst 36 is removed at least in part from the irradiated mixed stream 17 " and the remaining purified water comprising no or less disinfection by-products is introduced into the e.g. swimming pool water again. The purified water is mixed with the unpurified swimming pool water and therefore lowers the concentration of disinfection by-products in the swimming pool water, from which the stream 17 of water has been separated.

In the shown example of FIG 3, the filter unit 40 is illustrated downstream of the photo reactor 20. However, in certain aspects, the filter unit 40 may be arranged inside the photo reactor 20. Advantageously, the filter unit 40 can be arranged inside the photo reactor 20 or proximate to the photo reactor 20. The filter unit 40 being proximate to the photo reactor 20 or inside the photo reactor 20 provides the advantage of easy recycling of the photocatalyst 36.

Referring still to FIG 3, according to an aspect, the filter unit 40 is backwashed to remove the photocatalyst 36 responsive to the amount of irradiance of the UV light detected by the sensor 25. For example, the amount of irradiance of the UV light detected being low indicates that much UV light is being absorbed by the photocatalyst 36 and thus, indicates that the concentration of photocatalyst 36 in the mixed stream 17' is high. High concentration of photocatalyst 36 in the mixed stream 17' indicates that much photocatalyst 36 is being added to the stream 17, and thus, the amount of photocatalyst 36 being catched by the filter unit 40 is high. Thus, the filter unit 40 can be backwashed in cycle times responsive to the detected amount of irradiance of the UV light passed through the mixed stream 17'.

An irradiated mixed stream 17" comprising no or less disinfection by-products is discharged from the photo reactor 20 in the direction of the filter unit 40. The photocatalyst 36 is removed at least in part from the irradiated mixed stream 17 ". Purified water 17''' is discharged from the filter unit 40, which e.g. flows directly into a swimming pool or the like. The purified water 17''' is mixed with the e.g. unpurified swimming pool water and therefore lowers the concentration of disinfection by-products in the swimming pool water, from which the stream 17 of water has been separated.

In an aspect, the controller 30 can be configured to provide an indication to backwash the filter unit 40 responsive to the signal provided by the sensor 25. The indication may be provided as a visual indication or an audio indication. In this case the filter unit 40 can be backwashed by initiating the backwashing process manually. In another aspect, the controller 30 may be configured to initiate the backwashing process automatically in cycle times responsive to the signals provided by the sensor 25. In this case, the controller 30 can be configured to cease the flow of the mixed stream 17' into the filter unit 40 and control a not shown pump to direct cleaning water into the filter unit 40 for backwashing the filter unit 40. The flow of the mixed stream 17' into the filter unit 40 can be ceased by arranging a not shown valve in the path of flow of the mixed stream 17' from the photo reactor 20 to the filter unit 40. The controller 30 can be configured to close the valve to cease the flow of the mixed stream 17' into the filter unit 40.

In accordance with an embodiment, as the controller 30 is provided with the amount of irradiance of the UV light detected by the sensor 25, it can be configured to compute concentration of the photocatalyst 36 in the mixed stream 17' with respect to time. From the information of the concentration of the photocatalyst 36 in the mixed stream 17' and the respective time, the amount of photocatalyst 36 being adsorbed by the filter unit 40 may be computed. For example, the information of the concentration of the photocatalyst 36 in the mixed stream 17' over a period of time can provide an indication of the amount of photocatalyst 36 catched by the filter unit 40 over a period of time. The controller 30 can initiate the automated backwashing process or provide the indication for backwashing the filter unit 40 on the amount of photocatalyst 36 catched by the filter unit 40 on being equal to a predetermined threshold. The predetermined threshold can be a certain amount of adsorption of photocatalyst 36 at the filter unit 40 above which the functioning of the filter unit 40 is affected due to clogging. The predetermined threshold may be stored at a memory of the controller 30 or can be stored at an external memory connected to the controller 30.

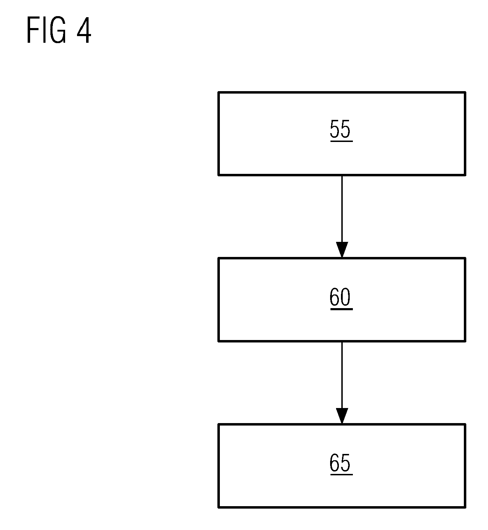

FIG 4 with reference to FIG 1 and FIG 2 is a flow diagram illustrating a method of reducing disinfection by-products in water according to an embodiment herein. At block 55, a photocatalyst 36 is added into a stream 17 of the water to obtain a mixed stream 17'. Next, at block 60, the mixed stream is irradiated with photons, the photocatalyst 36 in the mixed stream 17' producing free radicals on being irradiated with the photons. Moving next to block 65, the addition of the photocatalyst 36 into the stream 17 is controlled responsive to an absorption of the photons by the mixed stream 17'.

The embodiments described herein can be used for reducing organic and/or inorganic disinfection by-products in water generated due to addition of disinfectants to water. Water can be disinfected for human consumption, such as, swimming, bathing, drinking, and the like and also for industrial use, e.g. in water coolant circuits. For example, the disinfected water can be the chlorinated water of a swimming pool or water chlorinated for drinking purposes. Thus, the embodiments described herein can be used for reducing disinfection by-products occurring in water of a swimming pool, drinking water, etc. As the addition of photocatalyst 36 is controlled responsive to the amount of absorption of the UV light by the mixed stream 17', a balance between photolysis and photocatalysis is maintained adequately. This ensures the efficient reduction of organic disinfection by-products, such as combined chloramines, THMs and the like along with the inorganic disinfection by-products.

However, the specified permissible limits of various disinfection by-products differ for different human usage of the water. For example, currently the permissible limit of THM content in water for swimming differs from the permissible limit of THM content in water for drinking. At present, the permissible limit of THM in water for swimming in Germany is 20$\mu$g/l, while the permissible limit in water for drinking is 50 $\mu$g/l. The embodiments described herein can be adapted to reduce the disinfection by-products in water to be within the permissible limits or below, efficiently on the basis for what the water will be used for.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skill in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

**Claims**

1. A system (10) for reducing at least an amount of disinfection by-products in water, comprising:

   - at least one dosing pump (15) for adding a photocatalyst (36) into a stream (17) of the water to obtain a mixed stream (17'), and
   - a photo reactor (20) adapted to receive the mixed stream (17') and to irradiate the mixed stream (17') with photons, the photocatalyst (36) in the mixed stream being adapted to produce free radicals on being irradiated with the photons, wherein the dosing pump(s) (15) is/are controllable responsive to an amount of absorption of the photons by the mixed stream (17').

2. The system (10) according to claim 1, further comprising one or more sensors (25) arranged close to or inside the photo reactor (20) to detect an amount of irradiance of the photons after the photons passed through the mixed stream (17'), the one or more sensors (25) being configured to output respective signals indicative of the amount of irradiance of the photons.

3. The system (10) according to claim 2, further comprising at least one controller (30) operably coupled to the one or more sensors (25) to receive the respective signals, the controller(s) (30) being configured to provide a control signal to the dosing pump(s) (15) responsive to the respective signals, wherein the dosing pump(s) (15) is/are operable responsive to the control signal.

4. The system (10) according to claim 3, wherein the controller(s) (30) is/are configured to generate the control signal based on an average amount of the amounts of irradiance indicated by the respective signals provided by two or more sensors (25) at the same time.

5. The system (10) according to any one of the claims 2 to 4, wherein the dosing pump(s) (15) is/are operable to control the addition of the photocatalyst (36) such that a concentration of the photocatalyst in the mixed stream issettable in that the amount of irradiance of the photons detected is constant.

6. The system (10) according to any one of the claims 1 to 5, wherein the photocatalyst (36) is a chalcogenide.

7. The system (10) according to claim 6, wherein the chalcogenide is an oxide or a sulphide.

8. The system (10) according to claim 7, wherein the oxide is selected from the group consisting of a $TiO_2$, $ZnO$, $ZrO_2$, $CeO_2$, $SnO_2$, and $SbrO_2$ and the sulphide is $CdS$ or $ZnS$.

9. The system (10) according to claim any one of the claims 1 to 8, wherein the photocatalyst (36) is in the form of a slurry.

10. The system (10) according to any one of the claims 1 to 9, further comprising a filter unit (40) adapted to remove the photocatalyst (36) at least in part from an irradiated mixed stream (17 ") downstream of a place of irradiation of the mixed stream (17') with the photons.

11. The system (10) according to claim 10, wherein the system (10) comprises a filter backwashing system which is adapted to backwash the photocatalyst (36) removed from the irradiated mixed stream (17 ") by the filter unit (40) responsive to the amount of absorption of the photons by the mixed stream (17').

12. A method of reducing at least an amount of disinfection by-products in water, in particular using a system (10) according to any one of claims 1 to 11, comprising:

   - adding a photocatalyst (36) into a stream (17) of the water to obtain a mixed stream (17'), and
   - irradiating the mixed stream (17') with photons, the photocatalyst (36) in the mixed stream (17') producing free radicals on being irradiated with the photons, and
   - controlling the addition of the amount of photocatalyst (36) into the stream (17) responsive to an amount of absorption of the photons by the mixed stream (17').

13. The method according to claim 12, wherein the controlling of the addition of the amount of photocatalyst (36) comprises:

- detecting an amount of irradiance of the photons after the photons passed through the mixed stream (17'), and
- controlling the addition of the amount of photocatalyst (36) responsive to the amount of irradiance detected.

14. The method according to claim 12 or 13, wherein the photocatalyst (36) is a chalcogenide, in particular an oxide or a sulphide.

15. The method according to claim 14, wherein the oxide is selected from the group consisting of a $TiO_2$, $ZnO$, $ZrO_2$, $CeO_2$, $SnO_2$, and $SbrO_2$ and the sulphide is CdS or ZnS.

16. The method according to any one of claims 12 to 15, wherein the photocatalyst (35) is dosed to the stream (17) in form of a photocatalyst powder.

17. The method according to any one of claims 12 to 15, wherein the photocatalyst (35) is dosed to the stream (17) in form of a slurry containing a photocatalyst powder.

FIG 1

10

15

17

20

25

30

35

FIG 2

FIG 3

FIG 4

```
┌─────────────────────┐
│                     │
│         55          │
│                     │
└─────────────────────┘
           │
           ▼
┌─────────────────────┐
│                     │
│         60          │
│                     │
└─────────────────────┘
           │
           ▼
┌─────────────────────┐
│                     │
│         65          │
│                     │
└─────────────────────┘
```

Europäisches
Patentamt

European
Patent Office

Office européen
des brevets

# EUROPEAN SEARCH REPORT

Application Number

EP 10 17 8775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 041 042 A1 (HITACHI LTD [JP]) 4 October 2000 (2000-10-04) * the whole document * ----- | 1-17 | INV. C02F1/32 C02F1/72 |
| A | WO 2008/079311 A1 (DU PONT [US]; SCOTT DAVID M [US]; TORARDI CARMINE [US]; GRUSHIN VLADIM) 3 July 2008 (2008-07-03) * the whole document * ----- | 1-17 | |
| A | WO 92/07797 A1 (STANFORD RES INST INT [US]) 14 May 1992 (1992-05-14) * the whole document * ----- | 1-17 | |

TECHNICAL FIELDS
SEARCHED      (IPC)

C02F

The present search report has been drawn up for all claims

| Place of search | Date of completion of the search | Examiner |
|---|---|---|
| The Hague | 3 November 2010 | Liebig, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                              EP 10 17 8775

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2010

| Patent document cited in search report | | Publication date | Patent family member(s) | | Publication date |
|---|---|---|---|---|---|
| EP 1041042 | A1 | 04-10-2000 | CN | 1269330 A | 11-10-2000 |
| | | | JP | 2000288560 A | 17-10-2000 |
| | | | US | 6251264 B1 | 26-06-2001 |
| WO 2008079311 | A1 | 03-07-2008 | AU | 2007338719 A1 | 03-07-2008 |
| | | | EP | 2111369 A1 | 28-10-2009 |
| | | | US | 2010092377 A1 | 15-04-2010 |
| WO 9207797 | A1 | 14-05-1992 | CA | 2069444 A1 | 02-05-1992 |
| | | | DE | 69100478 D1 | 11-11-1993 |
| | | | DE | 69100478 T2 | 27-01-1994 |
| | | | EP | 0507939 A1 | 14-10-1992 |
| | | | JP | 5503252 T | 03-06-1993 |
| | | | US | 5130031 A | 14-07-1992 |

EPO FORM P0459

For more details about this annex : see Official Journal of the European Patent Office, No. 12/82